# EUROPÄISCHE PATENTSCHRIFT

(11) **EP 3 142 907 B1**
(45) Veröffentlichungstag und Bekanntmachung des Hinweises auf die Patenterteilung: **11.04.2018**
(21) Anmeldenummer: 15704217.7
(22) Anmeldetag: 14.02.2015
(51) Int. Cl.: B60T 17/00

(54) **VERFAHREN ZUM BETRIEB EINES DRUCKLUFTSYSTEMS EINES FAHRZEUGS**
METHOD FOR OPERATING A VEHICLE PNEUMATIC SYSTEM
METHODE POUR EMPLOYER UN SYSTEME PNEUMATIQUE D'UN VEHICULE

(30) Priorität: 14.05.2014 DE 102014007046; 26.09.2014 DE 102014014451
(43) Veröffentlichungstag der Anmeldung: 22.03.2017
(73) Patentinhaber: WABCO GmbH, 30453 Hannover (DE)
(72) Erfinder: BRINKMANN, Stefan, 31515 Wunstorf (DE); FEYERABEND, Konrad, 30625 Hannover (DE); STRILKA, Bernd, 30459 Hannover (DE)
(74) Vertreter: Lauerwald, Jörg
(86) Internationale Anmeldenummer: PCT/EP2015/000331
(87) Internationale Veröffentlichungsnummer: WO 2015/172858

(56) Entgegenhaltungen:
- EP-A1- 2 123 343
- EP-A2- 1 318 346
- EP-A2- 1 998 065

## Beschreibung

Die Erfindung betrifft ein Verfahren zum Betrieb eines Druckluftsystems eines Fahrzeugs gemäß dem Oberbegriff des Patentanspruchs 1.

Bekannte Druckluftsysteme für Fahrzeuge, insbesondere für Nutzfahrzeuge, arbeiten mit einem Kompressor, der gesteuert durch eine elektronische Steuereinrichtung einer Druckluftaufbereitungsanlage aus der Atmosphäre angesaugte Luft verdichtet. Die Steuereinrichtung schaltet den Kompressor für Förderphasen ein, wenn Druckluft im Druckluftsystem benötigt wird, und für Leerlaufphasen aus, wenn keine weitere Druckluftzufuhr notwendig ist. Die geförderte Druckluft wird bedarfsweise verschiedenen Einrichtungen des Fahrzeugs, wie Bremsanlagen und Nebenaggregaten, zur Verfügung gestellt. Zur Entfeuchtung der Druckluft ist in der Regel eine Lufttrocknereinrichtung mit einer Feuchtigkeit aufnehmenden Wechselkartusche vorgesehen. Um das dort angesammelte Wasser zu entfernen, wird von Zeit zu Zeit in einem so genannten Regenerationsvorgang trockene Luft aus dem Druckluftsystem in umgekehrter Richtung durch die Lufttrocknereinrichtung geleitet und über ein Entlüftungsventil in die Umgebung abgegeben. Bei tiefen Temperaturen kann es allerdings im Bereich der Lufttrocknereinrichtung, insbesondere am Entlüftungsventil, zum Gefrieren des ausgefallenen Wassers kommen. Dadurch können Fehlfunktion im Druckluftsystem verursacht werden.

Um eine Vereisung des Druckluftsystems bei niedrigen Temperaturen zu vermeiden oder eine bereits entstandene Eisbildung zu lösen, kann ein steuerbares Heizelement an der Lufttrocknereinrichtung angeordnet sein, welches bedarfsweise bestromt wird und durch Wärmeabgabe eine Eisbildung verhindert. Ein solches Heizelement erhöht jedoch die Herstellungskosten des Druckluftsystems und der Heizbetrieb vergrößert den Energiebedarf des Fahrzeugs. Es ist auch bekannt, mittels der genannten Steuereinrichtung zur Druckluftaufbereitung das Druckluftsystem zum Schutz gegen Vereisung bei niedrigen Umgebungstemperaturen in einen so genannten Kältebetrieb

(Cold Mode) umzuschalten. In dem Kältebetrieb wird der Kompressor mittels einer einfachen Steuerungsfunktion pauschal, mindestens für einen fest vorgegebenen Zeitraum, in einen Dauerbetrieb geschaltet. Die Druckluft, die durch den Verdichtungsprozess im Kompressor erwärmt wird, gibt dabei an die Lufttrocknereinrichtung Wärme ab, so dass die einfriergefährdeten Komponenten nicht vereisen. Durch den vorübergehenden Dauerbetrieb im Kältemodus wird jedoch zusätzlich Druckluft erzeugt, die vom Druckluftsystem nicht immer benötigt wird. Diese überschüssige Druckluft kann durch Öffnen des Entlüftungsventils in die Umgebung abgegeben werden. Durch die Zufuhr von warmer Druckluft und das Abblasen der warmen Druckluft werden die Systemkomponenten, insbesondere das Entlüftungsventil, auch bei niedrigen Temperaturen funktionsfähig gehalten. Der zeitweise zusätzliche Dauerbetrieb des Kompressors erhöht allerdings dessen Verschleiß und den Energiebedarf des Druckluftsystems.

Aus der DE 10 2010 011 571 A1 ist eine Lufttrocknereinrichtung eines Druckluftsystems für Fahrzeuge und ein Verfahren zur Vermeidung von Eisbildung an einer Entlüftungsventileinrichtung einer solchen Lufttrocknereinrichtung bekannt. Die Lufttrocknereinrichtung weist einen Kompressoranschluss zum Anschluss eines Kompressors, einen Entlüftungsanschluss zur Verbindung der Lufttrocknereinrichtung mit der Atmosphäre über die wahlweise zu öffnende oder zu schließende Entlüftungsventileinrichtung und einen Arbeitsanschluss des Druckluftsystems auf. Bei geschlossener Entlüftungsventileinrichtung wird vom Kompressor in den Kompressoranschluss eingespeiste Druckluft über den Arbeitsanschluss in das Druckluftsystem gefördert. Bei geöffneter Entlüftungsventileinrichtung wird vom Kompressor in den Kompressoranschluss eingespeiste Druckluft in die Atmosphäre abgeblasen, wobei die im Kompressor erwärmte Druckluft ohne Umwege über einen direkten Strömungsweg zu der Entlüftungsventileinrichtung geführt wird. Die warme Druckluft wird bedarfsweise, insbesondere bei niedrigen Temperaturen, vorsorglich zum Schutz gegen Vereisung der Entlüftungsventileinrichtung Ein weiteres Beispiels von Verfahren zur Vermeidung von Eisbildung in Luftaufbereitungsanlagen ist im EP 1 998 065 offenbart. Vor diesem Hintergrund liegt der Erfindung die Aufgabe zugrunde, ein Verfahren zum Betrieb eines Druckluftsystems für Fahrzeuge vorzustellen, welches kostengünstig herstellbar ist, sowie energiesparend und zuverlässig ein Vereisen von Komponenten des Druckluftsystems verhindert.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem energiesparenden Betrieb eines Druckluftsystems eines Fahrzeugs ein zur Erzeugung und Förderung der Druckluft eingesetzter Kompressor möglichst nur dann im Förderbetrieb laufen sollte, wenn dies zur Versorgung des Druckluftsystems tatsächlich erforderlich ist. Wird darüber hinaus zusätzlich Druckluft erzeugt und verwendet, um ein Einfrieren einer Lufttrocknereinrichtung mit einer Entlüftungsventileinrichtung des Druckluftsystems zu verhindern, soll der Kompressor nur solange wie nötig zusätzlich eingeschaltet werden, um eine entsprechende Temperaturerhöhung der einfriergefährdeten Komponenten zu erzielen. Die als Zielvorgabe minimal nötigen zusätzlichen Förderphasen beziehungsweise die dazu äquivalenten maximal erlaubten Leerlaufphasen des Kompressors können mit einem geeigneten Algorithmus berechnet und variabel gesteuert werden, der das Wärmeverhalten der einfriergefährdeten Komponenten in Abhängigkeit von der Umgebungstemperatur berücksichtigt.

Demnach geht die Erfindung aus von einem Verfahren zum Betrieb eines Druckluftsystems eines Fahrzeugs, mit einem elektronisch und/oder pneumatisch gesteuerten Kompressor, der in einem Normalbetrieb nach Bedarf Druckluft zur Versorgung des Druckluftsystems fördert und der außerhalb der Förderphasen ausgeschaltet oder in einem Leerlauf ist, bei dem ständig eine Umgebungstemperatur des Druckluftsystems erfasst und mit einer vorgegebenen Zieltemperatur verglichen wird, bei dem eine Einfriergefahr erkannt wird, wenn die Umgebungstemperatur die Zieltemperatur erreicht oder unterschreitet, und bei dem bei Erkennen einer Einfriergefahr ein Kältebetrieb aktiviert wird, wobei der Kompressor im Kältebetrieb zusätzlich zu den erforderlichen Förderphasen des Normalbetriebs Druckluft fördert, welche einfriergefährdeten Komponenten des Druckluftsystems zu deren Erwärmung zugeführt wird und anschließend dem Druckluftsystem zusätzlich zur Verfügung gestellt oder in die Umgebung abgegeben wird. Zur Lösung der gestellten Aufgabe sieht die Erfindung vor, dass eine zusätzliche Einschaltdauer des Kompressors im Kältebetrieb zumindest in einem vorgegebenen Umgebungstemperaturbereich variabel gesteuert und jeweils in Abhängigkeit der Temperaturdifferenz zwischen der Umgebungstemperatur und der Zieltemperatur bestimmt wird.

Unter einer Umgebungstemperatur wird eine Temperatur in der unmittelbaren Umgebung des Druckluftsystems verstanden. Die Umgebungstemperatur kann beispielsweise an einem Gehäuse des Druckluftsystems erfasst werden.

Unter einer Zieltemperatur wird eine Umgebungstemperatur verstanden, die um einen Sicherheitsbetrag oberhalb der Einfriertemperatur von Wasser liegt.

Unter einem Normalbetrieb (Normal Mode) wird eine Betriebsweise oberhalb der Zieltemperatur verstanden, bei welcher der Kompressor bedarfsweise Druckluft für das Druckluftsystem fördert.

Unter einem Leerlauf des Kompressors oder einem ausgeschalteten Kompressor wird verstanden, dass der Kompressor keine Druckluft fördert. Unter einem Einschalten des Kompressors wird verstanden, dass der Kompressor in eine Betriebsweise gebracht wird, in welcher er Druckluft fördert, wobei eine Einschaltdauer ein Zeitraum ist, in dem der Kompressor Druckluft fördert.

Unter einem Kältebetrieb (Cold Mode) wird eine Betriebsweise unterhalb der Zieltemperatur verstanden, bei welcher der Kompressor unabhängig von den bedarfsabhängigen Förderphasen eingeschaltet wird, wenn Komponenten des Druckluftsystems einfrieren oder einfrieren können und dies erkannt wird.

Bei einem energiesparenden Kältebetrieb (Cold Mode ES) gemäß der Erfindung können temperaturbedingte Einschaltphasen des Kompressors variabel gesteuert werden. Dadurch kann im Vergleich zur bekannten Steuerung des Kompressors mit pauschalen Dauerbetriebsphasen im Mittel eine geringere bedarfsorientierte Kompressor-Einschaltdauer erreicht werden. Dies senkt den Energieverbrauch und wirkt somit Kosten sparend und umweltschonend.

Der Kompressor fördert im Normalbetrieb bei Umgebungstemperaturen oberhalb der genannten Zieltemperatur nur bei Bedarf Druckluft in das Druckluftsystem. Die Druckluft ist von den angeschlossenen Verbrauchern, beispielsweise einer pneumatischen Bremsanlage eines Nutzfahrzeugs, an einem Arbeitsanschluss des Kompressors abgreifbar.

Wenn der Kompressor gerade nicht benötigt wird, beziehungsweise nicht fördern soll, wird er abgeschaltet oder in einen Leerlauf versetzt, wobei er mittels einer Ventileinrichtung ausgeschaltet und/oder mittels einer Schaltkupplung vom Antriebsstrang des Fahrzeug abgekoppelt ist, um möglichst wenig Energie beziehungsweise Kraftstoff zu verbrauchen.

Eine Steuereinrichtung des elektronisch gesteuerten Kompressors wechselt ab einer Umgebungstemperatur unterhalb der Zieltemperatur von einem Algorithmus "Normal Mode" in einen Algorithmus "Cold Mode". Dazu verfügt ein Druckluftsystem üblicherweise über eine Temperatursensorik, die beispielsweise eine Gehäusetemperatur in der Nähe eines Entlüftungsventils erfasst und diese Temperatur näherungsweise als Umgebungstemperatur interpretiert. Möglicherweise kann an einer einfriergefährdeten Stelle die Temperatur bereits den Gefrierpunkt von Wasser erreicht haben, obwohl die Temperatursensorik noch eine etwas höhere Temperatur misst. Als Einfriertemperatur wird daher eine Zieltemperatur angenommen, die um wenige Grad oberhalb 0°C liegt. Dadurch wird berücksichtigt, dass die Temperatursensorik nicht unbedingt die Temperatur direkt an einer einfriergefährdeten Stelle sondern in einem Abstand zu derselben misst.

Bei Verfahren gemäß dem Stand der Technik wurde der Kompressor bei Erkennen der Einfriergefahr wenigstens für einen festgelegten Zeitraum im Minutenbereich eingeschaltet, bis die Temperatur der durch Einfrieren gefährdeten Komponenten die Zieltemperatur erreicht hat. Der Kompressor fördert dadurch zusätzlich Druckluft, die beim Verdichtungsprozess aufgrund des steigenden Gasdrucks entsprechend der thermodynamischen Zustandsgleichung für Gase erwärmt wird. Diese geförderte Druckluft dient lediglich der Erwärmung der insbesondere im Bereich einer üblicherweise vorhandenen Lufttrocknereinrichtung befindlichen einfriergefährdeten Komponenten und entweicht in der Regel über ein Abblas- oder Entlüftungsventil in die Umgebung.

Diese Art der Erwärmung der einfriergefährdeten Komponenten erhöht die Einschaltdauer des Kompressors, wobei es aufgrund der pauschalen Zeitsteuerung des Kompressorbetriebs im Temperaturbereich unterhalb der Zieltemperatur tendenziell zu einer Temperaturüberhöhung am Abblas- oder Entlüftungsventil und somit zu einem unnötig hohen Energieverbrauch kommen kann. Abhängig von den klimatischen Bedingungen, unter denen das Fahrzeug überwiegend eingesetzt ist, kann eine fest vorgegebene Einschaltdauer aber auch tendenziell zu kurz sein, so dass es mehrmals kurz hintereinander oder regelmäßig zu häufigen zusätzlichen Einschaltvorgängen des Kompressors kommt.

Die bisher bekannte Steuerung kann durch die Erfindung mit einem neuen, energiesparenden Steuerungsalgorithmus, "Cold Mode ES" genannt, verbessert werden. Dieser Algorithmus berücksichtigt, dass die jeweils tatsächlich benötigte Einschaltdauer des Kompressors zur Erreichung der Zieltemperatur von der Umgebungstemperatur und der daraus folgenden zu überbrückenden Differenz zwischen der Umgebungstemperatur und der Einfriertemperatur, beziehungsweise der zu überbrückenden Differenz zwischen der Umgebungstemperatur und der vorgegebenen Zieltemperatur abhängt.

Dadurch wird der Energiebedarf für den Kompressorbetrieb des Fahrzeugs, welcher ein Einfrieren der betreffenden Komponenten verhindern soll, auf ein Minimum reduziert. Gleichzeitig kann sich auch die Anzahl von Ein- und Ausschaltvorgänge des Kompressors verringern, indem viele Dauerbetriebsphasen pauschaler Länge durch weniger gezielte Dauerbetriebsphasen mit flexibler Länge ersetzt werden. Dadurch können weitere Kosten gespart und der Verschleiß des Druckluftsystems verringert werden. Insbesondere kann die Lebensdauer einer Schaltkupplung zur schaltbaren Verbindung des Kompressors mit einem Antriebsmotor erhöht werden. Das Verfahren gemäß der Erfindung kann in eine bereits vorhandene Steuereinrichtung implementiert werden. Soweit eine geeignete Temperatursensorik im Fahrzeug beziehungsweise am Druckluftsystem vorhanden ist, sind auch keine zusätzlichen Vorrichtungen erforderlich.

Bei einer bevorzugten Ausführungsform des Verfahrens gemäß der Erfindung kann ein Regelalgorithmus durchgeführt werden, welcher wenigstens folgenden Schritte umfasst:
- Ermittlung der Temperaturdifferenz zwischen der Umgebungstemperatur und der Zieltemperatur,
- Ermittlung einer für den Kältebetrieb erforderlichen gesamten Kompressor-Einschaltdauer in Abhängigkeit von der ermittelten Temperaturdifferenz,
- Erfassung einer zur Versorgung des Druckluftsystems tatsächlich erfolgten Kompressor-Einschaltdauer,
- Bestimmung einer zusätzlichen Kompressor-Einschaltdauer aus der Differenz der erforderlichen Kompressor-Einschaltdauer und der tatsächlichen Kompressor-Einschaltdauer.

Demnach wird der energiesparende Kältebetrieb (Cold Mode ES) aktiviert, wenn festgestellt wird, dass eine Umgebungstemperatur unter der vorbestimmten Zieltemperatur liegt. Auf Basis der ermittelten Temperaturdifferenz wird eine Einschaltdauer des Kompressors ermittelt, welche ausreichend ist, um die Zieltemperatur zu erreichen. Dabei wird die Kompressor-Einschaltdauer der vom Druckluftsystem angeforderten Förderphasen berücksichtigt. Als Wert für die tatsächliche Kompressor-Einschaltdauer kann eine aktuelle Einschaltdauer und/oder ein Mittelwert über eine Anzahl von Schaltzyklen des Kompressors als Parameter zur Berechnung herangezogen werden.

Die Zuordnung einer jeweils erforderlichen Einschaltdauer zu der erfassten Temperaturdifferenz kann beispielsweise aus einem Kennfeld oder einer Kenntabelle entnommen werden, welches vorab empirisch ermittelt wurde und in einem Speicher einer Steuereinrichtung des Druckluftsystems abgelegt ist.

Ein solches Kennfeld oder Kenntabelle impliziert das Aufwärmverhalten und das Abkühlverhalten der einfriergefährdeten Komponenten des Druckluftsystems. Darin gehen ein: Die Wärmeübertragungseigenschaften, also die Parameter Wärmekapazität, Wärmeleitung und Wärmestrahlung der einfriergefährdeten Komponenten des Druckluftsystems sowie von im Fahrzeug benachbart zu diesen angeordneten Komponenten, welche ebenfalls das Aufwärmverhalten und das Abkühlverhalten der einfriergefährdeten Komponenten beeinflussen, wie beispielsweise die Temperatur von Antriebsmotor und Getriebe des Fahrzeugs, sowie die Strömungs- und Wärmeparameter des Druckluftstroms, welcher die einfriergefährdeten Komponenten beaufschlagt.

Explizit können zur Ermittlung einer für den Kältebetrieb erforderlichen gesamten Kompressor-Einschaltdauer einer oder mehrere der wärmeübertragungsrelevanten Parameter Einbauort, Geometrie und Materialeigenschaften der einfriergefährdeten Komponenten, Geometrie eines Strömungsweges zwischen dem Kompressor und den einfriergefährdeten Komponenten, sowie eine fahrzeuggeschwindigkeitsabhängige Fahrtwindströmung oder davon abhängige Größen berücksichtigt werden.

Weiterhin kann vorgesehen sein, dass bei dem Verfahren der Umgebungstemperaturbereich, in welchem die zusätzliche Kompressor-Einschaltdauer variabel gesteuert wird, durch eine untere und eine obere Grenztemperatur festgelegt ist, wobei die obere Grenztemperatur die Zieltemperatur ist, wobei der Kompressor bei Umgebungstemperaturen oberhalb der Zieltemperatur im Normalbetrieb betrieben wird und unterhalb der unteren Grenztemperatur mindestens für einen fest vorgegebenen Zeitraum im Dauerbetrieb betrieben wird.

Die variable Steuerung des Kompressors im Kältebetrieb ist besonders in einem Übergangsbereich von einigen Grad um die Einfriergrenze effizient einsetzbar und führt dort zu deutlichen Einsparungen durch jeweils kürzere Einschaltdauer. Das Verfahren kann auch mit der bisher genutzten Methode sinnvoll kombiniert werden, indem unterhalb einer Temperaturgrenze bei Temperaturen deutlich unter der Einfriertemperatur ein vorab zeitlich festgelegter Dauerbetrieb genutzt wird und nötigenfalls der Dauerbetrieb über den festgelegten Zeitraum hinaus verlängert wird.

Außerdem kann vorgesehen sein, dass bei einem Fahrzeugneustart zunächst eine umgebungs- und/oder motor- und/oder kühlwassertemperaturabhängige Aufwärmphase des Druckluftsystems durchgeführt wird. Dies kann beispielsweise durch einen temporären Dauerbetrieb des Kompressors realisiert sein. Dadurch kann insbesondere bei sehr niedrigen Umgebungstemperaturen verhindert werden, dass das Druckluftsystem zu Beginn der Fahrt einfriert.

Außerdem kann vorgesehen sein, dass in einem Schubbetrieb eines Fahrzeugantriebsmotors, welcher den Kompressor antreibt, eine aktuelle Leerlaufphase des Kompressors im Kältebetrieb temporär unterbrochen wird. Dadurch kann der Kompressor ohne zusätzlichen Kraftstoffverbrauch angetrieben werden, um die Temperatur der einfriergefährdeten Komponenten des Druckluftsystems zu erhöhen.

Schließlich kann vorgesehen sein, dass aufgrund einer gesonderten extern ausgelösten Anforderung eine aktuell vorliegende Leerlaufphase des Kompressors unterbrochen und der Normalbetrieb des Kompressors eingeschalt wird. Eine extern ausgelöste Anforderung kann eine solche sein, die durch den Fahrer des Kraftfahrzeugs durch manuelles Betätigen eines Schalters oder Regelschiebers bewirkt wurde.

Zur weiteren Verdeutlichung der Erfindung ist der Beschreibung eine Zeichnung eines Ausführungsbeispiels beigefügt. In dieser zeigt
Fig. 1 ein Schaltdiagramm eines Kompressors eines Druckluftsystems gemäß dem Stand der Technik,
Fig. 2 ein Schaltdiagramm eines Kompressors eines Druckluftsystems nach dem Verfahren gemäß der Erfindung, und
Fig. 3 ein Blockschaltbild eines Regelalgorithmus des Verfahrens gemäß der Erfindung.

Ein nicht dargestelltes Druckluftsystem eines Kraftfahrzeugs weist im Wesentlichen einen Kompressor, eine Lufttrocknereinrichtung mit einer Entlüftungsventileinrichtung, Druckluftleitungen, einen Temperatursensor sowie eine elektronische Steuerungseinrichtung auf. Der Kompressor erzeugt Druckluft für an einen Arbeitsanschluss anschließbare Druckluft-Verbraucher, wie etwa eine pneumatische Bremsanlage eines Nutzfahrzeugs. Eine solche Bremsanlage weist einen oder mehrere Druckluftvorratsbehälter auf, welche von dem Kompressor gespeist werden. Die Lufttrocknereinrichtung entzieht der verdichteten Luft Feuchtigkeit, welche sich als Wasser ansammelt und regelmäßig über ein Entlüftungsventil in die Umgebung abgeblasen wird. Die Lufttrocknereinrichtung mit der Entlüftungsventileinrichtung ist aufgrund der ausgefallenen Feuchtigkeit bei niedrigen Umgebungstemperaturen einfriergefährdet. Der Temperatursensor erfasst eine Gehäusetemperatur des Druckluftsystems, welche näherungsweise der Umgebungstemperatur entspricht. Die Entlüftungsventileinrichtung und der Temperatursensor können konstruktionsbedingt in unterschiedlichen Gerätebaugruppen angeordnet sein, so dass sich die erfasste Temperatur und die tatsächliche Temperatur der einfriergefährdeten Komponenten etwas unterscheiden können. Daher wird eine Zieltemperatur oberhalb von 0°C als sicherheitsrelevanter Temperaturwert für das Erkennen einer Einfriergefahr festgelegt.

Bei einem herkömmlichen Verfahren nach dem Stand der Technik fördert der Kompressor in einem "Normal Mode" bei Umgebungstemperaturen oberhalb der Zieltemperatur, beispielsweise T_Ziel = +2°C, nur bei Bedarf Druckluft in das Druckluftsystem. Außerhalb dieser Förderphasen befindet sich der Kompressor in einem Leerlauf. Um den Kompressor auszuschalten und einzuschalten beziehungsweise um zwischen einem Leerlaufbetrieb und einen Förderbetrieb umzuschalten, ist der Kompressor beispielsweise über eine Schaltkupplung von der Antriebswelle eines Antriebsmotors entkoppelbar beziehungsweise mit dieser antriebsverbindbar.

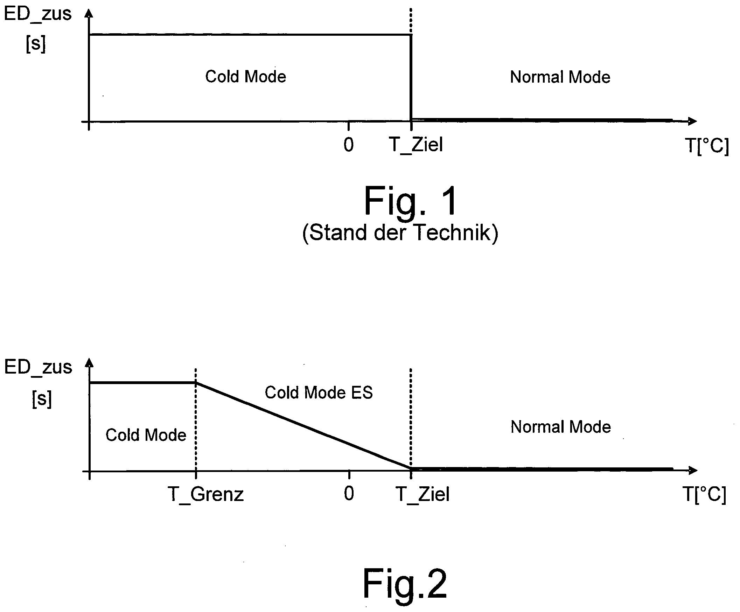

Von Umgebungstemperaturen unter 0°C an, beziehungsweise unterhalb der um einen Sicherheitsbetrag erhöhten Zieltemperatur, wechselt ein das Druckluftsystem steuernder Algorithmus vom "Normal Mode" in einen "Cold Mode" und der Kompressor wird wenigstens für einen festgelegten bestimmten Mindestzeitraum, beispielsweise für zwei Minuten, für einen Dauerbetrieb eingeschaltet. Der Kompressor fördert nun zusätzlich Druckluft, die beim Verdichtungsprozess erwärmt wird. Diese Druckluft dient lediglich der Erwärmung der im Bereich der Lufttrocknereinrichtung befindlichen einfriergefährdeten Komponenten und entweicht über ein Abblasventil in die Umgebung. Die zusätzliche Förderphase beziehungsweise Abblasphase dauert zumindest den festgelegten Zeitraum, also zwei Minuten, auch wenn es innerhalb dieses Zeitraums zu einer tatsächlichen Temperaturüberhöhung im Vergleich zur Zieltemperatur am Entlüftungsventil kommt. Fig. 1 veranschaulicht diese zusätzliche konstante Einschaltdauer ED_zus. Bei Temperaturen oberhalb der Zieltemperatur T_Ziel wird der Kompressor nicht zusätzlich eingeschaltet. Der feste Zeitraum für die Abblasphase kann jedoch dazu führen, dass der Kompressor erst oberhalb der Zieltemperatur T_Ziel in den Normalbetrieb wechselt beziehungsweise ausgeschaltet wird.

Demgegenüber ermöglicht das Verfahren gemäß der Erfindung eine den Umgebungsbedingungen angepasste, variable, zusätzliche Kompressor-Einschaltdauer ED_zus im Kältebetrieb. Dies wird anhand Fig. 2 verdeutlicht. Demnach werden in einem Betriebsmodus "Cold Mode ES" die Leerlaufphasen beziehungsweise die zusätzlichen Förderphasen oder Abblasphasen in Abhängigkeit von der Temperaturdifferenz zwischen der Umgebungstemperatur und der Zieltemperatur T_Ziel derart berechnet, dass die Länge der jeweils erforderlichen Abblasphasen nur so groß wie nötig ist, um die entsprechende Temperaturerhöhung an den einfriergefährdeten Komponenten zu erzielen. Je näher die Umgebungstemperatur an der Zieltemperatur T_Ziel ist, desto geringer ist die ermittelte zusätzlich benötigte Einschaltdauer, um die Zieltemperatur T_Ziel zu erreichen.

Bei sehr niedrigen Temperaturen, beispielsweise unterhalb einer Grenztemperatur T_Grenz = -6°C, schaltet die Steuerung vom flexiblen Betriebsmodus "Cold Mode ES" zurück in den quasi konstanten Betriebsmodus "Cold Mode". Durch den in Fig. 2 veranschaulichten rampenartigen Übergang der Kompressor-Einschaltdauer ED_zus zwischen der Grenztemperatur T_Grenz und der Zieltemperatur T_Ziel, welcher aus der impliziten Berücksichtigung des Abkühl- und Aufwärmverhaltens der einfriergefährdeten Komponenten bei der Berechnung der zusätzlichen Einschaltdauer ED_zus des Kompressors resultiert, können Energieeinsparungen im Kompressorbetrieb erreicht werden.

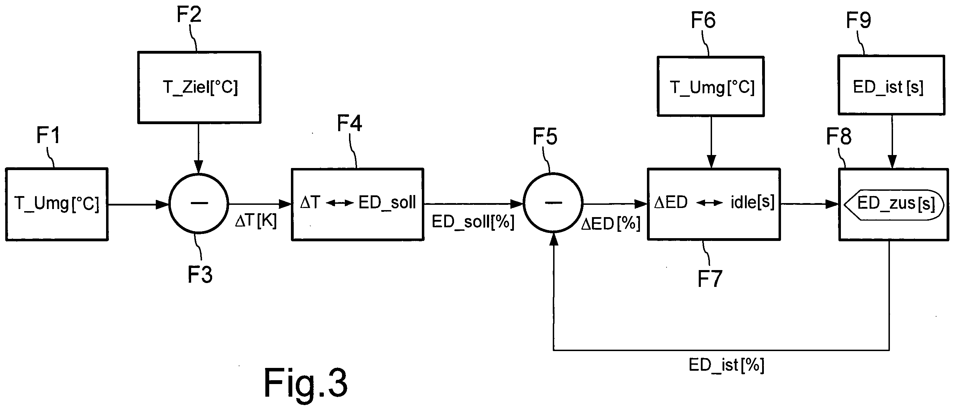

Fig. 3 zeigt in einem Blockschaltbild ein Ausführungsbeispiel für eine Implementierung eines Regelalgorithmus des Verfahrens in eine vorhandene Steuerung eines Druckluftsystems eines Fahrzeugs.

Die Einschaltdauer ED des Kompressors wird darin zunächst in eine relative Rechengröße umgewandelt, gemäß ED = (pump + dump) / (pump + dump + idle) [%], wobei "pump" für Förderphase, "dump" für Abblasphase und "idle" für Leerlaufphase stehen. Im reinen Dauerbetrieb beträgt ED=1, im reinen Leerlaufbetrieb beträgt ED=0.

In einem ersten Block F1 des Regelalgorithmus wird die Umgebungstemperatur T_Umg erfasst. In einem zweiten Block F2 wird die Zieltemperatur T_Ziel vorgegeben. In einem dritten Block F3 wird daraus die Temperaturdifferenz ΔT gebildet. In einem vierten Block F4 wird anhand einer Tabelle der ermittelten Temperaturdifferenz ΔT eine erforderliche Einschaltdauer ED_soll des Kompressors zugeordnet. Die ermittelte erforderliche relative Einschaltdauer ED_soll [%] wird als Eingangsgröße in einem nachfolgenden Regelkreis verwendet. Aus einem neunten Block F9 wird der Wert der tatsächlichen Einschatdauer ED_ist [s] des Kompressors zu einem achten Block F8 geleitet. In dem achten Block F8 wird die tatsächliche Einschaltdauer ED_ist [s] des Kompressors erfasst und in eine relative Einschaltdauer ED_ist [%] umgewandelt. Anschließend wird diese relative Einschaltdauer ED_ist [%] zu einem fünften Block F5 geleitet. In dem fünften Block F5 wird die Differenz ΔED [%] der beiden relativen Einschaltdauern ED_soll [%], ED_ist [%] gebildet. In einem sechsten Block F6 wird die Umgebungstemperatur T_Umg einem siebten Block F7 zur Verfügung gestellt. In diesem siebten Block F7 wird in einer weiteren Tabelle die relative Einschaltdauerdifferenz ΔED [%] mit einer absoluten zulässigen Leerlaufphase idle in Sekunden in Abhängigkeit der Umgebungstemperatur T_Umg abgeglichen. Die Berechnung der Länge einer Abblasphase beziehungsweise einer zusätzlichen Förderphase des Kompressors ergibt sich schließlich aus der Differenz ΔED zwischen der erforderlichen Kompressor Einschaltdauer ED_soll und der tatsächlichen Kompressoreinschaltdauer ED_ist, der Länge der aktuellen Förderphase, und der zulässigen Leerlaufphase in Abhängigkeit von der Umgebungstemperatur T_Umg. Daraus ergibt sich eine absolute zusätzliche Einschaltdauer ED_zus, die beispielsweise zwischen Null Sekunden und zwei Minuten variieren kann sowie im Block F8 für die Steuerung des Betriebs des Kompressors bereitgestellt wird. Der Kompressor wird zusätzlich für den Zeitraum der berechneten Einschaltdauer ED_zus im "Cold Mode ES" betrieben, um ein Einfrieren der einfriergefährdeten Komponenten des Druckluftsystem zu verhindern.

### Bezugszeichen und Abkürzungen (Teil der Beschreibung)

- dump: Kompressor-Abblasphase
- ED: Kompressor-Einschaltdauer
- ED_ist: Tatsächliche Kompressor-Einschaltdauer
- ED_soll: Erforderliche Kompressor-Einschaltdauer
- ED_zus: Zusätzliche Kompressor-Einschaltdauer
- ΔED: Einschaltdauerdifferenz zwischen ED_soll und ED_ist
- F1 bis F9: Funktionsblöcke
- idle: Kompressor-Leerlaufphase
- pump: Kompressor-Förderphase
- T: Temperatur
- T_Grenz: Grenztemperatur
- T_Umg: Umgebungstemperatur
- T_Ziel: Zieltemperatur
- ΔT: Temperaturdifferenz zwischen T_Ziel und T_Umg

## Patentansprüche

1. Verfahren zum Betrieb eines Druckluftsystems eines Fahrzeugs, mit einem elektronisch und/oder pneumatisch gesteuerten Kompressor, der in einem Normalbetrieb nach Bedarf Druckluft zur Versorgung des Druckluftsystems fördert und der außerhalb der Förderphasen ausgeschaltet oder in einem Leerlauf ist,
bei dem ständig eine Umgebungstemperatur (T_Umg) des Druckluftsystems erfasst und mit einer vorgegebenen Zieltemperatur (T_Ziel) verglichen wird,
bei dem eine Einfriergefahr erkannt wird, wenn die Umgebungstemperatur (T_Umg) die Zieltemperatur (T_Ziel) erreicht oder unterschreitet,
und bei dem bei Erkennen einer Einfriergefahr ein Kältebetrieb aktiviert wird,
wobei der Kompressor im Kältebetrieb zusätzlich zu den erforderlichen Förderphasen des Normalbetriebs Druckluft fördert, welche einfriergefährdeten Komponenten des Druckluftsystems zu deren Erwärmung zugeführt wird und anschließend dem Druckluftsystem zusätzlich zur Verfügung gestellt oder in die Umgebung abgegeben wird, **dadurch gekennzeichnet,**
**dass** eine zusätzliche Einschaltdauer (ED_zus) des Kompressors im Kältebetrieb zumindest in einem vorgegebenen Umgebungstemperaturbereich variabel gesteuert und jeweils in Abhängigkeit der Temperaturdifferenz (ΔT) zwischen der Umgebungstemperatur (T_Umg) und der Zieltemperatur (T_Ziel) bestimmt wird.

2. Verfahren nach Anspruch 1, **dadurch gekennzeichnet, dass** ein Regelalgorithmus durchgeführt wird, welcher wenigstens folgende Schritte umfasst:
- Ermittlung der Temperaturdifferenz (ΔT) zwischen der Umgebungstemperatur (T_Umg) und der Zieltemperatur (T_Ziel),
- Ermittlung einer für den Kältebetrieb erforderlichen gesamten Kompressor-Einschaltdauer (ED_soll) in Abhängigkeit der ermittelten Temperaturdifferenz (ΔT),
- Erfassung einer zur Versorgung des Druckluftsystems tatsächlich erfolgten Kompressor-Einschaltdauer (ED_ist),
- Bestimmung einer zusätzlichen Kompressor-Einschaltdauer (ED_zus) aus der Differenz der erforderlichen Kompressor-Einschaltdauer (ED_soll) und der tatsächlichen Kompressor-Einschaltdauer (ED_ist).

3. Verfahren nach Anspruch 1 oder 2, **dadurch gekennzeichnet, dass** zur Ermittlung einer für den Kältebetrieb erforderlichen gesamten Kompressor-Einschaltdauer (ED_soll) einer oder mehrere der wärmeübertragungsrelevanten Parameter Einbauort, Geometrie und Materialeigenschaften der einfriergefährdeten Komponenten, Geometrie eines Strömungsweges zwischen dem Kompressor und den einfriergefährdeten Komponenten, und fahrzeuggeschwindigkeitsabhängige Windströmung oder davon abhängige Größen berücksichtigt werden.

4. Verfahren nach einem der Ansprüche 1 bis 3, **dadurch gekennzeichnet, dass** der Umgebungstemperaturbereich, in welchem die zusätzliche Kompressor-Einschaltdauer (ED_zus) variabel gesteuert wird, durch eine untere und eine obere Grenztemperatur festgelegt ist, wobei die obere Grenztemperatur die Zieltemperatur (T_Ziel) ist, wobei der Kompressor bei Umgebungstemperaturen (T_Umg) oberhalb der Zieltemperatur (T_Ziel) im Normalbetrieb betrieben wird sowie unterhalb der unteren Grenztemperatur (T_Grenz) für einen fest vorgegebenen Zeitraum im Dauerbetrieb betrieben wird.

5. Verfahren nach einem der Ansprüche 1 bis 4, **dadurch gekennzeichnet, dass** bei einem Fahrzeugneustart zunächst eine umgebungs- und/oder motor- und/oder kühlwassertemperaturabhängige Aufwärmphase des Druckluftsystems durchgeführt wird.

6. Verfahren nach einem der Ansprüche 1 bis 5, **dadurch gekennzeichnet, dass** in einem Schubbetrieb eines Fahrzeugantriebsmotors, welcher den Kompressor antreibt, eine aktuelle Leerlaufphase des Kompressors im Kältebetrieb temporär unterbrochen wird.

7. Verfahren nach einem der Ansprüche 1 bis 6, **dadurch gekennzeichnet, dass** aufgrund einer gesonderten extern ausgelösten Anforderung eine aktuell vorliegende Leerlaufphase des Kompressors unterbrochen und der Normalbetrieb des Kompressors eingeschalt wird.

## Claims

1. Method for operating a pneumatic system of a vehicle with an electronically and/or pneumatically controlled compressor, which in a normal mode supplies compressed air as required for supplying the pneumatic system and which is switched off or is in an idle mode outside the supply phases,
with which an ambient temperature (T_Umg) of the pneumatic system is detected and is continuously compared with a predetermined target temperature (T_Ziel),
with which a risk of freezing is detected if the ambient temperature (T_Umg) reaches or drops below the target temperature (T_Ziel),
and with which a cold mode is activated on detecting a risk of freezing,
wherein in the cold mode in addition to the necessary supply phases of the normal modes the compressor supplies compressed air that is fed to components at risk of freezing of the pneumatic system to heat them and that is then additionally provided to the pneumatic system or is discharged into the surroundings,
**characterized in that**
an additional switch-on duration (ED_zus) of the compressor is variably controlled in the cold mode, at least in a predetermined ambient temperature range, and is determined in each case depending on the temperature difference (ΔT) between the ambient temperature (T_Umg) and the target temperature (T_Ziel).

2. Method according to Claim 1, **characterized in that** a control algorithm is carried out that comprises at least the following steps:
- determining the temperature difference (ΔT) between the ambient temperature (T_Umg) and the target temperature (T_Ziel),
- determining a total compressor switch-on duration (ED_soll) that is necessary for the cold mode depending on the determined temperature difference (ΔT),
- detecting an actually completed compressor switch-on duration (ED_ist) for supplying the pneumatic system,
- determining an additional compressor switch-on duration (ED_zus) from the difference of the necessary compressor switch-on duration (ED_soll) and the actual compressor switch-on duration (ED_ist).

3. Method according to Claim 1 or 2, **characterized in that** one or a plurality of the thermal transfer-relevant parameters installation location, geometry and material properties of the components at risk of freezing, geometry of a flow path between the compressor and the components at risk of freezing and vehicle speed-dependent airflow, or variables that are dependent thereon, are taken into account for determining a total compressor switch-on duration (ED_soll) necessary for the cold mode.

4. Method according to any one of Claims 1 to 3, **characterized in that** the ambient temperature range in which the additional compressor switch-on duration (ED_zus) is variably controlled is determined by a lower and an upper temperature limit, wherein the upper temperature limit is the target temperature (T_Ziel), wherein the compressor is operated in the normal mode at ambient temperatures (T_Umg) above the target temperature (T_Ziel) and is operated in the continuous mode for a fixed predetermined period of time below the lower temperature limit (T_Grenz).

5. Method according to any one of Claims 1 to 4, **characterized in that** in the case of a re-start of the vehicle, first an ambient temperature-dependent and/or an engine temperature-dependent and/or a cooling water temperature-dependent heating phase of the pneumatic system is carried out.

6. Method according to any one of Claims 1 to 5, **characterized in that** in an engine braking mode of a vehicle drive engine that is driving the compressor, a current idle phase of the compressor in the cold mode is temporarily interrupted.

7. Method according to any one of Claims 1 to 6, **characterized in that** owing to a separate externally triggered request a currently existing idle phase of the compressor is interrupted and the normal mode of the compressor is switched on.

## Revendications

1. Procédé de conduite d'un système d'air comprimé pour véhicule, le système présentant un compresseur commandé électroniquement et/ou pneumatiquement qui, en fonctionnement normal, délivre de l'air comprimé pour alimenter le système d'air comprimé selon les besoins et qui est débranché ou mis en fonctionnement à vide en dehors des phases d'alimentation,
dans lequel la température ambiante (T_Umg) du système d'air comprimé est saisie et comparée en permanence à une température cible prédéterminée (T_Ziel),
dans lequel un risque de givrage est détecté si la température ambiante (T-Umg) atteint ou n'atteint plus la température cible (T_Ziel) et
dans lequel un fonctionnement à froid est activé lorsqu'un risque de givrage est détecté,
le compresseur fournissant en fonctionnement à froid de l'air comprimé en supplément aux phases d'alimentation nécessaires en fonctionnement normal, cet air comprimé étant apporté en vue de leur réchauffement aux composants en risque de givrage du système d'air comprimé et étant ensuite mis à disposition du système d'air comprimé ou dégagé dans l'environnement,
**caractérisé en ce que**
au moins dans une plage prédéterminée de température ambiante, une durée supplémentaire de branchement (ED_zus) du compresseur déterminée en fonction de la différence de température (ΔT) entre la température ambiante (T_Umg) et la température cible (T_Ziel) est commandée de manière variable en fonctionnement à froid.

2. Procédé selon la revendication 1, **caractérisé en ce qu'**un algorithme de régulation est exécuté et présente au moins les étapes suivantes :
détermination de la différence de température (ΔT) entre la température ambiante (T_Umg) et la température cible (T_Ziel),
détermination d'une durée globale de branchement (ED_soll) du compresseur, nécessaire pour le fonctionnement à froid, en fonction de la différence de température (ΔT) qui a été déterminée,
saisie d'une durée de branchement effectivement réalisée (ED-ist) du compresseur pour l'alimentation du système d'air comprimé et
détermination d'une durée supplémentaire de branchement (ED_zus) du compresseur à partir de la différence entre la durée nécessaire de branchement (ED_soll) du compresseur et la durée de branchement effectivement réalisée (ED-ist) du compresseur.

3. Procédé selon les revendications 1 ou 2, **caractérisé en ce que** pour déterminer une durée nécessaire totale de branchement (ED_soll) du compresseur, un ou plusieurs des paramètres intervenant dans le transfert de chaleur que sont le site de montage, la géométrie et les propriétés du matériau des composants présentant un risque de givrage, la géométrie du parcours d'écoulement entre le compresseur et les composants présentant un risque de givrage et l'écoulement du vent fonction de la vitesse du véhicule ou des grandeurs qui en dépendant sont pris en compte.

4. Procédé selon l'une des revendications 1 à 3, **caractérisé en ce que** la plage de température ambiante dans laquelle la durée supplémentaire de branchement (ED_zus) du compresseur est commandée de manière variable est définie par une température limite inférieure et une température limite supérieure, la température limite supérieure étant la température cible (T_Ziel), le compresseur étant utilisé en fonctionnement normal lorsque la température (T_Umg) se situe au-dessus de la température cible (T_Ziel) et étant utilisé en fonctionnement permanent pendant une durée prédéterminée en dessous de la température limite inférieure (T_Grenz).

5. Procédé selon l'une des revendications 1 à 4, **caractérisé en ce que** lors du démarrage du véhicule, une phase préalable de réchauffement du système d'air comprimé est d'abord exécutée en fonction de la température ambiante, de la température du moteur et/ou de la température de l'eau de refroidissement.

6. Procédé selon l'une des revendications 1 à 5, **caractérisé en ce que** lorsque le moteur d'entraînement du véhicule qui entraîne le compresseur est en phase de poussée, une phase de fonctionnement à vide en cours du compresseur en fonctionnement à froid est temporairement interrompue.

7. Procédé selon l'une des revendications 1 à 6, **caractérisé en ce que** sur la base d'une demande particulière déclenchée depuis l'extérieur, une phase en cours de fonctionnement à vide du compresseur est interrompue et le fonctionnement normal du compresseur est branché.
